# EUROPÄISCHE PATENTSCHRIFT

(11) **EP 1 306 536 B1**
(45) Veröffentlichungstag und Bekanntmachung des Hinweises auf die Patenterteilung: **14.12.2016**
(21) Anmeldenummer: 02102452.6
(22) Anmeldetag: 16.10.2002
(51) Int. Cl.: F02D 31/00, A01D 41/127

(54) **Motorleistungssteuerungssystem**
Vehicle engine control
Système de commande de puissance de sortie d'un moteur

(30) Priorität: 24.10.2001 US 999725
(43) Veröffentlichungstag der Anmeldung: 02.05.2003
(73) Patentinhaber: Deere & Company, Moline, IL 61265 (US)
(72) Erfinder: Sheidler, Alan, David, Moline, IL 61265 (US); Tingle, Kyle, John, Colona, IL 61241 (US); Hennings, Kenny, L., Tripoli, IA 50676 (US); Brockmann, William, A., Moline, IL 61265 (US); Sahlin, Mark, Peter, Bettendorf, IA 52722 (US)
(74) Vertreter: Holst, Sönke

(56) Entgegenhaltungen:
- EP-A- 0 950 346
- DE-A- 19 919 682
- US-A- 4 522 553
- US-A- 4 542 802
- US-A- 5 586 033
- PATENT ABSTRACTS OF JAPAN vol. 1998, no. 11, 30. September 1998 (1998-09-30) & JP 10 155341 A (YANMAR AGRICULT EQUIP CO LTD), 16. Juni 1998 (1998-06-16)
- PATENT ABSTRACTS OF JAPAN vol. 1998, no. 13, 30. November 1998 (1998-11-30) & JP 10 225225 A (MITSUBISHI AGRICULT MACH CO LTD), 25. August 1998 (1998-08-25)
- PATENT ABSTRACTS OF JAPAN vol. 007, no. 145 (M-224), 24. Juni 1983 (1983-06-24) & JP 58 057037 A (TOYO KOGYO KK;OTHERS: 01), 5. April 1983 (1983-04-05)

## Beschreibung

Die Erfindung betrifft ein Motorleistungssteuerungssystem nach dem Oberbegriff des Anspruchs 1.

Mähdrescher sind große landwirtschaftliche Maschinen, die zur Ernte von Korn oder anderer Nutzteile von Pflanzen, an denen sie wachsen, verwendet werden. Derartiges Ernten des Ernteguts umfasst beispielsweise das Abschneiden von Pflanzen, die derartiges Erntegut enthalten, oder ein Abtrennen des Ernteguts von den Pflanzen auf andere Art, Dreschen und Trennen des Ernteguts vom Pflanzenmaterial und Reinigen des Ernteguts von dem es stützenden Pflanzenmaterial und anderen Verunreinigungen, die mit dem Erntegut verbunden sein könnten. Ein derartiger Mähdrescher hat in der Regel einen Korntank zur zeitweiligen Lagerung geernteten Guts. Der Mähdrescher hat auch einen Entladeschneckenförderer zum Entladen des Ernteguts auf einen Abtankwagen oder Anhänger. Mähdrescher können außerdem mit zusätzlichen Gutbearbeitungseinrichtungen, wie Strohhäckslern und Kaffstreuern ausgestattet sein. Mähdrescher sind typischerweise als selbstfahrende Fahrzeuge ausgeführt.

Ein typischer Mähdrescher nutzt einen einzigen Motor, um alle Maschinenfunktionen mit Leistung zu versorgen, einschließlich der verschiedenen oben erwähnten Operationen, zusätzlich zum Antrieb des Vortriebs des Fahrzeugs von Ort zu Ort während des normalen Betriebsverlaufs. Die Belastung des Motors variiert somit entsprechend der auf die verschiedenen Einrichtungen ausgeübten Belastungen, die während des normalen Betriebs des Mähdreschers aktiviert, betrieben und abgeschaltet werden.

Ein typischer derartiger Mähdrescher arbeitet mit einer festgelegten Motorgeschwindigkeit. Typische Mähdrescher haben zwei oder drei Geschwindigkeitseinstellungen, die beispielsweise "langsamer", "mittlerer" und "hoher" Geschwindigkeit entsprechen. Jede derartiger Geschwindigkeiten hat eine Zieldrehzahl des Motors. Beispielsweise kann eine "langsame" Geschwindigkeit eine Zieldrehzahl des Motors von etwa 1200 Umdrehungen je Minute haben. Die "mittlere" Geschwindigkeit kann eine Zieldrehzahl des Motors von etwa 1600 Umdrehungen je Minute haben. Die "hohe" Geschwindigkeit kann eine Zieldrehzahl des Motors von etwa 2200 Umdrehungen je Minute haben.

Die Geschwindigkeitseinstellung wird vom Bediener vorgenommen. Sobald der Bediener eine Geschwindigkeitseinstellung auswählt, steuert eine elektronische Motorsteuerungseinheit (ECU, engine control unit) die Motorgeschwindigkeit entsprechend der ausgewählten Geschwindigkeitseinstellung, in erster Linie durch ein dynamisches Verstellen der Menge des in die Zylinder des Motors eingespritzten Kraftstoffs. Wenn der Bediener eine andere Geschwindigkeitseinstellung auswählt, antwortet die Motorsteuerungseinheit durch eine Änderung der in die Zylinder eingespritzten Kraftstoffmenge um die Motorgeschwindigkeit auf der vorbestimmten Zielmotorgeschwindigkeit zu halten.

Eine primäre Aufgabe der elektronischen Steuerungseinheit ist, die Motorgeschwindigkeit dynamisch konstant zu halten angesichts jeglicher Belastungen, die auf den Motor ausgeübt werden. Wenn eine Belastung ausgeübt wird, die ein Absinken der Motorgeschwindigkeit unter eine erste, vorbestimmte Drehzahl bedingt, steigert die Motorsteuereinheit die in die Zylinder eingespritzte Kraftstoffmenge, um die vom Motor entwickelte Leistung zu vergrößern und somit die Motorgeschwindigkeit innerhalb eines Zielbereichs zwischen der ersten und einer zweiten vorbestimmten Drehzahl zu halten.

Wenn in ähnlicher Weise Belastungen entfernt oder vermindert werden, was bedingt, dass die Motorgeschwindigkeit über ein zweites, vorbestimmtes Niveau hinaus steigt, vermindert die Motorsteuerungseinheit die Menge des Kraftstoffs, der in die Zylinder eingespritzt wird, um die vom Motor entwickelte Leistung zu vermindern und auf diese Weise die Motorgeschwindigkeit innerhalb des Zielbereichs zwischen der ersten und der zweiten vorbestimmten Drehzahl zu halten.

Konventionelle Motorsteuerungseinheiten antworten beim Bestreben, die Motorgeschwindigkeit innerhalb eines vorbestimmten Drehzahlbereichs zu halten, somit auf Motorgeschwindigkeitsänderungen durch eine Änderung des Kraftstoffflusses zu den Zylindern.

Während die Motorsteuerungseinheit somit durch Reaktionen antwortet, können stufenförmige Änderungen der Motorbelastung wesentliche Absenkungen der Motorgeschwindigkeit bedingen, bevor die Motorsteuerungseinheit auf die sich dynamisch ändernde Situation antworten kann.

Die US 4 522 533 A schlägt vor, die Motorleistung um einen bestimmten Betrag auf ein höheres Niveau anzuheben, wenn der Entladeschneckenförderer eingeschaltet wird und die Motorleistung analog wieder um einen entsprechenden Betrag zu vermindern, wenn der Entladeschneckenförderer ausgeschaltet wird.

In der DE 199 19 682 A1 wird eine Vorrichtung zur Ansteuerung des Verbrennungsmotors eines Fahrzeugs beschrieben, die das Drehmoment oder die Drehzahl abhängig von dem Betriebszustand von Nebenverbrauchern und dem Antriebsmoment einer Servolenkung bestimmt. Letzteres wird abhängig vom Fahrzustand des Fahrzeugs und seiner Beladung bestimmt.

Die JP 10 225 225 A beschreibt einen Mähdrescher, dessen Motordrehzahl davon abhängt, ob eine Drescheinrichtung eingeschaltet ist, und die beim Befahren einer Kurve angehoben wird.

Die JP 10 155 341 A beschreibt einen Mähdrescher, bei dem der Durchsatz des Ernteguts am Einzugsförderer erfasst und zur vorausschauenden Bestimmung der Motordrehzahl genutzt wird.

Der große Bereich der betriebenen Systeme, der im Mähdrescher Leistung verbraucht, hat jedoch eine konstant variierende Leistungsanforderung an den Motor und den Motorantriebsstrang zur Folge. Wenn mehrere Leistungsanforderungen gleichzeitig ansteigen oder falls eine Leistungsanforderung stufenförmig um einen wesentlichen Betrag ansteigt, kann der Motor überlastet werden, so dass die Motorgeschwindigkeit unter einen akzeptablen Wert sinkt. Wenn die Motorgeschwindigkeit unter eine derartige akzeptable Geschwindigkeit sinkt, können Motorsysteme wie Kühlung oder Schmierung beeinträchtigt werden, so dass die Lebensdauer des Motors vermindert wird. Außerdem kann die Fähigkeit des Motors, den Betrieb weiterzuführen und/oder wieder zur gewünschten Motorgeschwindigkeit zu gelangen, gefährdet sein, wenn eine übermäßige Last ausgeübt wird. Falls eine unerwartete hohe Belastung mit einer vorhersagbaren Laständerung verbunden ist, kann die kombinierte Wirkung der vorhersagbaren und der unerwarteten Belastung einen negativen Effekt auf den Gesamtbetrieb des Motors oder das Empfinden des Bedieners bezüglich des Motorbetriebs haben. Wenn jedoch bestimmte Belastungsänderungen vorgesagt und vorweggenommen werden können und die Motorleistung vorausschauend den erwarteten Belastungen angepasst wird, kann der schädliche Kopplungseffekt konkurrierender unerwarteter Belastungsanstiege vermindert oder vermieden werden.

Die der Erfindung zu Grunde liegende Aufgabe wird darin gesehen, eine Motorsteuerungseinheit bereitzustellen, bei der die nachteiligen Auswirkungen unerwarteter Belastungsänderungen vermindert sind.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine Motorsteuerungseinheit verwendet eine Leistungskurve oder einen Algorithmus für eine Leistungskurve, um die Kraftstoffflussrate in einen Motor mit innerer Verbrennung vorausschauend (pro-aktiv) einzustellen, in Erwartung von Änderungen der auf den Motor ausgeübten Belastungen. Die Motorsteuerungseinheit erhält Informationen, die sich auf die gegenwärtigen und erwarteten Leistungsanforderungen beziehen, verwendet diese Informationen, um die anstehenden Leistungsanforderungen zu berechnen, und passt die Kraftstoffflussrate zum Motor an, um die Leistungsabgabe des Motors an die additive Summe der Belastungen anzupassen. Die Motorsteuerungseinheit weist zumindest eine in einem Speicher abgelegte Leistungskurve und/oder einen Algorithmus für eine Leistungskurve auf, die bzw. der verwendbar ist, eine von vorbestimmten Betriebsbedingungen, die sich von einer gemessenen Motorgeschwindigkeit unterscheiden, abhängige Sequenz vorausschauender Änderungseingaben mit vorbestimmten Änderungsraten der den Verbrennungskammern des Motors zugeführten Kraftstoffmengen zu Zeitpunkten bereitzustellen, die auf den Zeitpunkten basieren, an denen die jeweiligen Betriebsbedingungen auftreten. Auf diese Weise wird die Leistung des Motors vorausschauend an die zu erwarteten Belastungen angepasst, so dass es nur noch in geringerem Maße zu unerwarteten und unerwünschten Drehzahländerungen kommen kann.

Die Leistungskurve oder der-algorithmus umfasst erfindungsgemäß:
(i) eine erste, ansteigende Linie, die eine erste Menge kleiner stufenförmiger Anstiege der Motorleistung über einen ersten Zeitraum in der Vorwegnahme einer ansteigenden Kornbeladung eines Korntanks auf dem Fahrzeug über den jeweiligen Zeitraum wiedergibt,
(ii) einen zweiten, verhältnismäßig größeren stufenförmigen Anstieg in der Motorleistung, der in Erwartung einer vergrößerten Belastung auf den Motor (28) bewirkt und dann durchgeführt wird, wenn ein Entladeschneckenförderer auf dem Fahrzeug aktiviert wird, um Korn aus dem Korntank zu entladen,
(iii) eine dritte, verhältnismäßig kleinere, absinkende Linie, die eine zweite Menge kleiner stufenförmiger Absenkungen der Motorleistung über einen zweiten Zeitraum in der Vorwegnahme einer verminderten Belastung des Motors über einen folgenden Zeitraum wiedergibt, während dem der Entladeschneckenförderer Korn aus dem Korntank entlädt, und
(iv) ein viertes, verhältnismäßig größeres stufenförmiges Absinken der Motorleistung, das in Erwartung einer verminderten Belastung des Motors bewirkt und dann durchgeführt wird, wenn der Entladeschneckenförderer abgeschaltet wird.

Außerdem kann die Motorsteuerung die Eingaben von einem derartigen vorausschauenden Algorithmus mit den Eingaben von einem reaktiven Algorithmus kombinieren, um daraus ein kombiniertes Kraftstoffflussratensteuerungssignal für die Kraftstoffeinspritzeinrichtungen am Motor zu entwickeln.

Eine Ausführungsform der Erfindung umfasst bei einem motorgetriebenen Fahrzeug ein Motorleistungssteuerungssystem, das die Ausgangsleistung des Motors steuert. Das Motorleistungssteuerungssystem umfasst ein Kraftstoffsystem einschließlich einer Kraftstoffpumpe und Verstellmittel, die abhängig von an einem Eingang der Verstellmittel bereitgestellten Kontrollsignalen die Rate vorgeben, mit der Kraftstoff in die Brennkammern des Motors abgegeben wird, um dadurch die Ausgangsleistung des Motors einzustellen, und eine elektronische Motorsteuerung, die in der Lage ist, eine Reihe an Kontrollsignalen zu erzeugen und an die Verstellmittel abzugeben, die die Verstellmittel veranlassen, die Rate zu ändern, mit der Kraftstoff an die Brennkammern abgegeben wird und dadurch die Ausgangsleistung des Motors zu ändern. Die elektronische Motorsteuerung hat eine Leistungskurve und/oder einen Algorithmus für eine Leistungskurve, die bzw. der in einem Speicher abgelegt sind und in Reaktion auf gewisse, vorbestimmte Betriebsbedingungen, bei denen es sich nicht um die gemessene Motorgeschwindigkeit handelt, zu Zeitpunkten, die auf dem zeitlichen Verlauf des Auftretens der jeweiligen Betriebsbedingungen basieren, eine Sequenz vorausschauender Änderungseingaben mit vorbestimmten Änderungsraten für die Abgaberate von Kraftstoff in die Brennkammern des Motors bereitstellt, um dadurch pro-aktive, stufenförmige Änderungen in der Ausgangsleistung des Motors zu erzeugen. Derartige pro-aktive stufenförmige Leistungsänderungen werden in Erwartung von Änderungen der Belastung des Motors durchgeführt, wobei die pro-aktiven stufenförmigen (oder stufenlosen) Leistungsänderungen im Wesentlichen erwarteten, stufenförmig fortschreitenden Änderungen der Belastungsanforderungen an den Motor entsprechen. Die Belastungsanforderungen können anhand der besagten Betriebsbedingungen oder auch anhand des Betriebszustands des Motors erfasst werden.

Bei bevorzugten Ausführungsformen der Erfindung hat das Fahrzeug eine zusätzliche Funktion, beispielsweise eine Korntankentladungsfunktion, die auch durch den Motor mit Leistung versorgt wird, wobei die zusätzliche Funktion immer betrieben werden kann, wenn sich das Fahrzeug bewegt (oder steht). Das Motorleistungssteuerungssystem umfasst weiterhin eine zum Aktivieren und Deaktivieren der zusätzlichen Funktion verwendbaren, stufenweise arbeitenden Schalter. Der Schalter kann manuell oder automatisch durch irgendwelche Sensoren betätigt werden, die im Fall der Korntankentladung beispielsweise den Füllstand des Korntanks erfassen und den Entladevorgang beim Erreichen eines bestimmten Korntanks veranlassen, sobald ein Behälter zum Aufnehmen des Korns vorhanden ist, was automatisch durch einen geeigneten optischen Sensor erfasst oder manuell durch einen Schalter eingegeben werden kann. Die gespeicherte Leistungskurve und/oder der gespeicherte Algorithmus für die Leistungskurve stellt zu Zeitpunkten, die auf den Aktivierungen und Deaktivierungen des Schalters basieren, verhältnismäßig größere stufenförmige Änderungseingaben für die Menge des den Brennkammern des Motors zugeführten Kraftstoffs bereit, während sie bzw. er gleichzeitig und additiv zu Zeitpunkten, die auf dem zeitlichen Verlauf der jeweiligen gewissen vorbestimmten Betriebsbedingungen, die sich von der zusätzlichen Funktion unterscheiden, basieren, pro-aktiv relativ kleinere stufenförmige Änderungseingaben für die Menge des den Brennkammern des Motors zugeführten Kraftstoffs bereitstellt. Somit stellt die auf diese Weise von der elektronischen Motorsteuerung verwendete Kurve eine additive Kombination pro-aktiver relativ größerer stufenförmiger Änderungseingaben mit relativ kleineren stufenförmigen Änderungseingaben für die Ausgangsleistung des Motors in Erwartung sich ändernder Belastungsanforderungen an den Motor bereit.

Bei bevorzugten Ausführungsformen ist die Leistungskurve oder der Leistungsalgorithmus abhängig von einem oder mehreren Echtzeit-Betriebsbedingungen, die aus folgender Gruppe sein können: Massenmenge des Korns in einem Korntank des Fahrzeugs, Korntankmassenbefüllrate, Kornfeuchtigkeit, Dichte des im Korntank aufgenommenen Korns, und Änderungen in der Neigung des Geländes, über das sich das Fahrzeug bewegt.

Optional ist eine zweite vorbestimmte Betriebsbedingung, auf die die Leistungskurve oder der Algorithmus reagiert, die zusätzliche Funktion, die die Aktivierung und Deaktivierung des Entladeförderers, der Korn aus dem Korntank entlädt, wobei vorausschauende stufenförmige Änderungen der Leistung basierend auf erwarteten Belastungsänderungen auf den Motor durchgeführt werden, die sich auf das Starten, Betreiben und Anhalten des Entladeschneckenförderers durch Bedienung des Schalters beziehen.

In den Zeichnungen ist ein nachfolgend näher beschriebenes Ausführungsbeispiel der Erfindung dargestellt. Es zeigt:
- Fig. 1: eine halbschematische Seitenansicht eines Mähdreschers, in dem ein erfindungsgemäßes Motorsteuerungssystem verwirklicht ist,
- Fig. 2: ein halbschematisches Blockdiagramm, das verschiedene angetriebene Systeme darstellt, die den Betrieb des Motorsteuerungssystems beeinflussen,
- Fig. 3: ein Diagramm, das eine stufenförmige Leistungsanhebung gemäß des Standes der Technik darstellt, die mit der Aktivierung und Deaktivierung des Entladeschneckenförderers verbunden ist,
- Fig. 4: ein Diagramm, das die Leistungsanforderungen des Entladesystems darstellt,
- Fig. 5: ein Diagramm, das die Änderungen der zum Vortrieb des Fahrzeugs erforderlichen Leistung bei sich ändernden Kornmengen im Korntank repräsentiert, und
- Fig. 6: ein Diagramm, das die kombinierten Änderungen in der Leistung darstellt, die durch fortgehende Änderungen der Masse des Ernteguts im Korntank und mit dem Ein- und Ausschalten des Entladeschneckenförderers zum Entladen des Ernteguts aus dem Korntank verbundene Leistungsanforderungen bedingt werden.

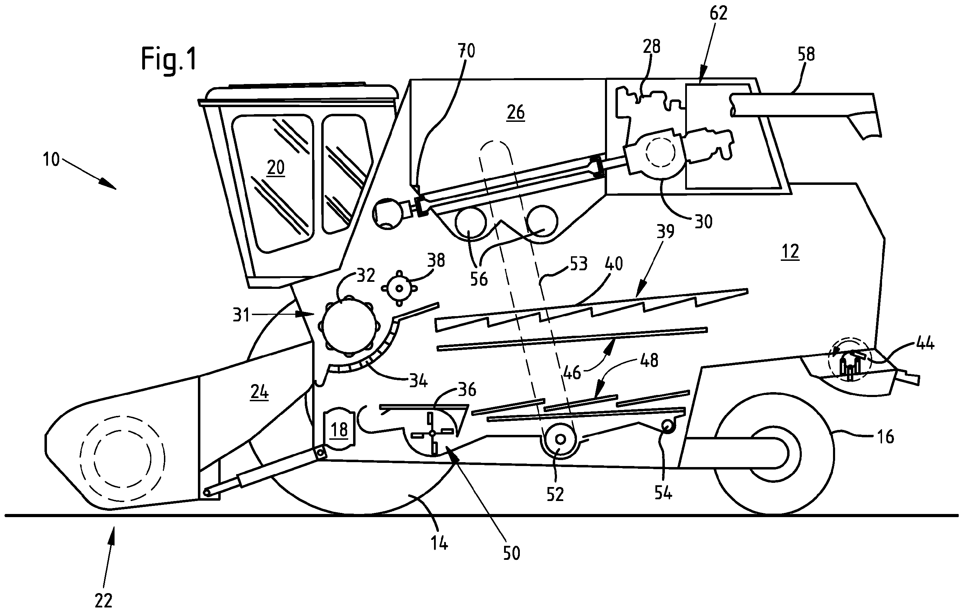

Die Figur 1 zeigt einen landwirtschaftlichen Mähdrescher 10 mit einem Fahrgestell 12 und sich im Eingriff mit dem Erdboden befindlichen Rädern 14 und 16. Die vorderen Räder 14 werden durch einen hydrostatischen Motor 18 angetrieben, der zwischen den Rädern 14 angeordnet ist. Ein in einer Bedienerkontrollkabine 20 sitzender Bediener steuert den Betrieb des Mähdreschers. Ein Schneidwerk 22 erstreckt sich vom Fahrgestell 12 nach vorn und wird verwendet, das Erntegut von auf einem Feld stehenden Pflanzen zu trennen, die derartiges Erntegut produzieren, und um das derart abgetrennte Erntegut in den Mähdrescher 10 einzuführen. Nachdem das Erntegut in den Mähdrescher 10 eingeführt ist, wird es durch einen Schrägförderer 24 und in die Bereiche des Mähdreschers 10 geführt, die das Erntegut von unerwünschten Resten, wie Pflanzenteilen, die nicht Erntegut sind, und Unkraut trennen.

Während die Erfindung hier anhand des Erntens von Getreide beschrieben wird, ist anzumerken, dass sie ebenso gut auch in Ausführungsformen verwendet werden kann, die andere Fahrzeuge verwenden oder bei denen anderes Erntegut als Korn geerntet wird.

Ein Korntank 26 für sauberes Korn ist hinter der Bedienerkontrollkabine 20 an der Oberseite des Mähdreschers 10 angeordnet. Hinter dem Korntank 26 befindet sich der quer angeordnete Motor 28 mit innerer Verbrennung, zum Beispiel ein Dieselmotor, der den Primärantrieb des Mähdreschers 10 darstellt und den Vortriebszusammenbau wie auch verschiedene Gutbearbeitungszusammenbauten antreibt, die das den Mähdrescher durchlaufende Erntegut verarbeiten. Der Motor 28 ist mit einem Antriebszusammenbau 30 ausgestattet, um die verschiedenen mechanischen Nutzzusammenbauten anzutreiben. Eine nähere Beschreibung eines derartigen konventionellen Antriebszusammenbaus 30 ist in der US 4 843 803 A enthalten, deren Offenbarung mit Verweis in die vorliegenden Unterlagen aufgenommen wird.

Der Dreschzusammenbau 31 und die Trenneinrichtung 39 sind zwischen den Seitenwänden des Mähdreschers 10 angeordnet, die Teile des Fahrgestells 12 bilden. Die Dresch- und Trennzusammenbauten trennen Korn oder anderes Erntegut beispielsweise von Spreu, Stroh und anderem den Mähdrescher durchlaufendem Material. Derartiges Material kann beispielsweise Unkraut und Unkrautsaaten, Boden und andere Verunreinigungen sein, die vom Schneidwerk vom Boden oder in der Nähe der Bodenoberfläche aufgenommen werden.

Der Schrägförderer 24 führt das Erntegut dem Dreschzusammenbau 31 zu, der eine rotierende, quer angeordnete Dreschtrommel 32, einen quer angeordneten Dreschkorb 34 und eine rotierende Leittrommel 38 umfasst. Wenn das Erntegut zwischen der Dreschtrommel 32 und dem Dreschkorb 34 hindurchgeführt wird, fallen Korn und Spreu durch den Dreschkorb 38 auf einen Vorbereitungsboden 36 und das verbleibende Pflanzenmaterial wird der Leittrommel 38 zugeführt. Nach dem Dreschen wird das Stroh im Erntegut der Trenneinrichtung 39 zugeführt. Die Hauptelemente der Trenneinrichtung 39 sind Strohschüttler 40. Von der Leittrommel 38 wird das Pflanzenmaterial den oszillierenden Strohschüttlern 40 zugeführt, die das Stroh zur Rückseite des Mähdreschers 10 fördern, wo das Stroh von einem Strohhäcksler 44 aufgenommen wird. Der Strohhäcksler 44 wiederum häckselt das verbleibende Pflanzenmaterial in kleinere Bestandteile, bevor das Stroh auf das Feld ausgestoßen wird.

Korn und Spreu, die durch die Strohschüttler 40 hindurchfallen, fallen auf einen oszillierenden, geneigten Boden 46, der sie dem Vorbereitungsboden 36 zuführt. Das Korn und die Spreu werden durch oberschlächtig arbeitende Schneckenfördererzusammenbauten einem Siebkastenzusammenbau 48 zugeführt, der zum Trennen der Spreu vom Korn benutzt wird.

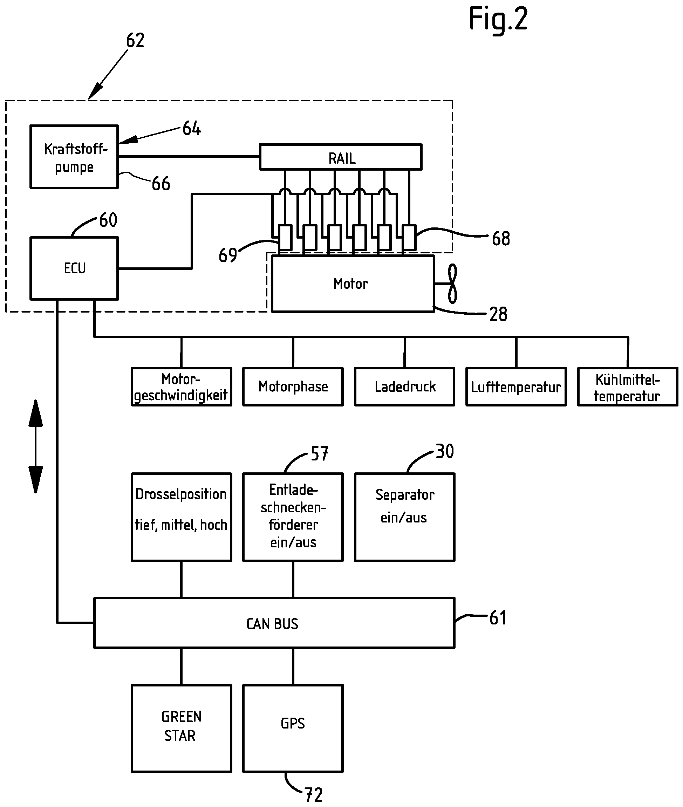

Das Korn und die Spreu, die auf die Ober- und Untersiebe des Siebkastenzusammenbaus 36 fallen, sind einem Luftstrom von einem Gebläse 50 ausgesetzt, das die leichtere Spreu an der Rückseite des Mähdreschers 10 ausbläst, während das schwerere Korn durch den Siebkastenzusammenbau 36 und in einen das saubere Korn aufnehmenden Schneckenförderer 52 fällt. Der Schneckenförderer 52 führt das saubere Korn einem Elevator 53 für sauberes Korn zu, der es wiederum in den Korntank 26 fördert. Überkehr, d. h. ungedroschene Kornähren, fallen in einen Überkehrschneckenförderer 54, der die ungedroschenen Ähren zur Dreschtrommel 32 und zum Dreschkorb 34 zurückfördert. Wenn der Korntank 26 zu entladen ist, führen quer angeordnete Entladeschneckenförderer 56 das Korn zur Seite des Korntanks 26, an der es mit einem Entladeschneckenförderer 57 (Figur 2) in Berührung kommt, der das saubere Korn durch ein Entladerohr 58 aus dem Mähdrescher 10 herausfördert.

Wie oben beschrieben, werden verschiedene Gutbearbeitungseinrichtungen durch den Motor 28 mit Leistung versorgt. Der Motor 28 ist mit einer als elektronische Motorsteuerung dienenden elektronischen Motorsteuerungseinheit (ECU) 60 verbunden. Die elektronische Motorsteuerungseinheit 60 befindet sich wiederum in Kommunikation mit verschiedenen Sensoren und betriebenen Systemen, einschließlich eines Netzwerkbusses 61 eines CAN-Netzwerks, und sammelt dabei verschiedene Daten bezüglich der Parameter, unter denen der Mähdrescher zu jedem gegebenen Zeitpunkt arbeitet. Ein derartiges Netzwerk und die Motorsteuerungseinheit kommunizieren und arbeiten ansonsten beim Überwachen und Steuern verschiedener betriebener Systeme im Mähdrescher zusammen, während sie derartigen Systemen eine hinreichende Leistung bereitstellen, um den normalen Betrieb derartiger betriebener Systeme aufrecht zu erhalten.

Zum Beispiel, und mit Verweis auf Figur 2, umfasst ein Motorleistungssteuerungssystem 62 die Motorsteuerungseinheit 60 und ein Kraftstoffsystem 64, das in Kombination mit der Motorsteuerungseinheit 60 arbeitet, um die Menge des dem Motor 28 zugeführten Kraftstoffs zu kontrollieren, und damit die Ausgangsleistung des Motors 28. Das Betriebsstoffsystem 64 umfasst eine Kraftstoffpumpe 66 und eine Vielzahl an Einspritzelementen 68, die Kraftstoff in die Zylinder des Motors 28 einspritzen. Das Motorleistungssteuerungssystem 62 umfasst somit die Motorsteuerungseinheit 60, die Kraftstoffpumpe 66, die Einspritzelemente 68 und Verstellmittel 69 an den Einspritzelementen 68. Die Motorsteuerungseinheit 60 stellt einen fortlaufenden Strom an Steuersignalen, die zeitlich kurz beabstandet sind, bereit, die die Verstellmittel 69 der Einspritzelemente 68 steuern, um auf diese Weise die Flussrate des Kraftstoffs in den Motor 28 zu steuern.

Wie oben beschrieben, arbeiten konventionelle Motorleistungssteuerungssysteme in einem reagierenden Modus mit dem Ziel, die Motorgeschwindigkeit konstant zu halten. Das primäre Werkzeug zur Konstanthaltung der Motorgeschwindigkeit ist, Änderungen der Motorgeschwindigkeit zu erfassen und die Kraftstoffrate als Reaktion auf derartige Geschwindigkeitsänderungen anzupassen. Typischerweise wird ein Motorgeschwindigkeitsbereich, z. B. zwischen 2100 und 2300 Umdrehungen je Minute für den Routinebetrieb angestrebt, wahlweise mit einer spezifischen Zielgeschwindigkeit von etwa 2200 Umdrehungen pro Minute.

Solange die Motorgeschwindigkeit innerhalb der Grenzen des Geschwindigkeitszielbereichs bleibt, kann die Flussrate des Kraftstoffs konstant gehalten werden. Bei einigen alternativen Ausführungsformen kann die Motorsteuerungseinheit den Kraftstofffluss jederzeit anpassen, wenn die Motorgeschwindigkeit sogar nur nominell von der spezifizierten Zielgeschwindigkeit abweicht. In einem derartigen Fall verstellt die Motorsteuerungseinheit die Kraftstoffrate kontinuierlich, auch anbetrachts der Verzögerungszeit zwischen der Änderung der Kraftstoffflussrate und der Änderung der Motorausgangsleistung, auf der Suche nach der Zielgeschwindigkeit.

In beiden Fällen sinkt die Motorgeschwindigkeit ab, wenn eine gesteigerte Belastung auf den Motor 28 ausgeübt wird. Wenn die Motorgeschwindigkeit unter die untere Grenze des Zielbereichs oder unter die spezifische Zielgeschwindigkeit absinkt, erfasst die elektronische Motorsteuerungseinheit 60 die Geschwindigkeitsänderung und reagiert auf die Motorgeschwindigkeitsänderung durch eine Vergrößerung der Flussrate des Kraftstoffs in die Verbrennungskammern des Motors, wobei der Betrag der vom Motor 28 entwickelten Leistung gesteigert wird. Da die Motorsteuerungseinheit 60 jedoch erst reagiert, nachdem sich die Motorgeschwindigkeit geändert hat, wird das Ziel eines Aufrechterhaltens einer konstanten Motorgeschwindigkeit durch den Aufbau des Leistungssteuerungssystems selbst verfehlt. Falls die Belastungsänderung plötzlich und/oder wesentlich ist, kann die Antwort der Motorsteuerungseinrichtung zu langsam sein, eine angemessene Leistungsabgabe zu erhalten, um der gesamten Änderung der Last zu begegnen, wobei die Laständerung einen negativen Einfluss auf die Motorgeschwindigkeit haben kann. Wenn die Laständerung wesentlich ist, kann die Motorgeschwindigkeit wesentlich beeinträchtigt werden. Da alle Systeme des Mähdreschers 10 geschaffen sind, bei abgestimmter Motorgeschwindigkeit zu arbeiten, wird jedes Mal, wenn die Motorgeschwindigkeit wesentlich absinkt, die Effizienz verschiedener Vorgänge des Mähdreschers negativ beeinflusst.

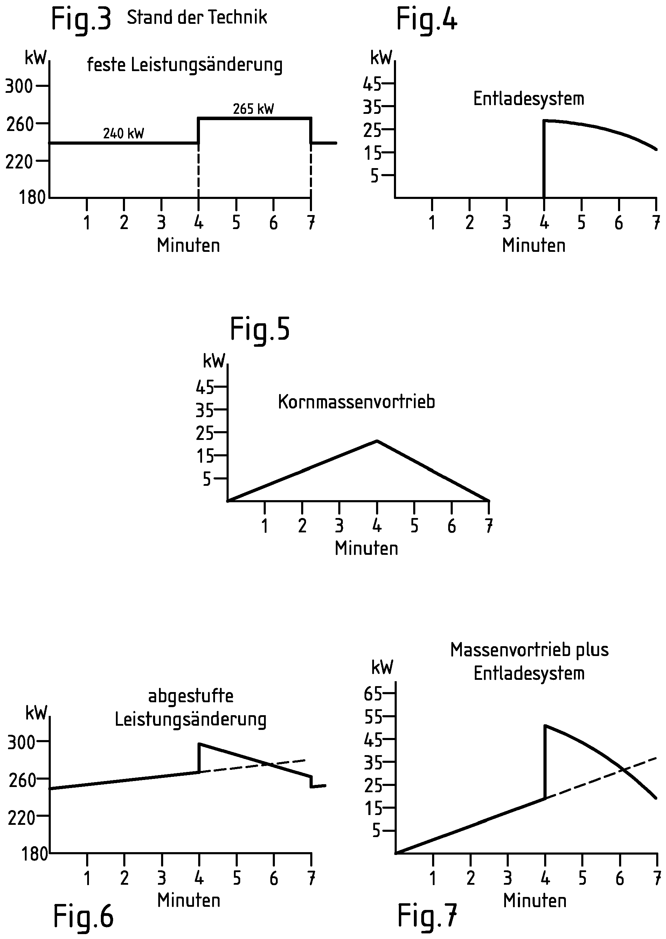

Die Figur 3 repräsentiert eine Leistungskurve eines Motorleistungssteuerungssystems gemäß des Standes der Technik, das jedes Mal die Kraftstoffflussrate automatisch erhöht und somit die Motorleistungsabgabe um einen festen Betrag anhebt, wenn das Entladesystem im Betrieb ist, und entsprechend die Kraftstoffflussrate um einen ähnlichen Betrag vermindert, wenn der Entladeschneckenförderer aus dem aktiven Betrieb abgeschaltet wird. Die Figur 3 illustriert eine Leistungsanhebung von ungefähr 24 kW (33 PS), von 237 kW (325 PS) auf 263 kW (358 PS).

Die Figur 4 ist ein Graph, der illustriert, dass die Leistungsanforderung des Entladesystems bei etwa 29 kW (40 PS) anfängt und bis zu der Zeit, an der der Korntank 26 in etwa leer ist, auf etwa 20 kW (28 PS) absinkt. Mit Verweis auf das oben Erwähnte sind die in Figur 3 illustrierten zugefügten 24 kW weniger als die in Figur 4 illustrierte Leistungsanforderung von 29 kW, wodurch die Motorgeschwindigkeit wahrnehmbar absinken kann, wenn das Entladesystem eingeschaltet wird. Mit fortschreitendem Entladen steigt die Motorgeschwindigkeit bei konstantem Kraftstofffluss und sinkender Leistungsanforderung nach und nach an. Wenn danach das Entladesystem abgeschaltet wird, kann die Motorgeschwindigkeit, was manchmal stattfindet, momentan ansteigen, bis der Kraftstofffluss vermindert wird, damit er mit dem abgesunkenen Leistungsbedarf übereinstimmt. Durch die Verwendung des Lasthandhabungssystems aus Figur 3 wird der Motor manchmal als mit zu geringer Leistung betrieben angesehen, wenn das Entladesystem eingeschaltet wird und die Motorgeschwindigkeit absinkt, und der Motor kann kurzfristig den Eindruck des "Rennens" erwecken, wenn das Entladesystem abgeschaltet wird. Die Kundenmeinung bevorzugt hingegen eine konstante Motordrehzahl, die das Bild einer konstanten und vorhersagbaren Motorleistung mit sich trägt.

Die Figur 5 ist ein Graph, der mit einer durchgezogenen Kurve typische stufenweise Anstiege darstellt, die zeitlich nahe benachbart sind, wie mehrmals in einer Sekunde, in dem Betrag der zum Vortrieb des Mähdreschers 10 als Landfahrzeug über ein Feld erforderlichen Leistung, wenn Korn in den Korntank eingebracht wird, und den nachfolgenden, absinkenden Betrag an Leistung, der erforderlich ist, den Mähdrescher 10 über das Feld zu bewegen, wenn Korn durch den Entladeschneckenförderer aus dem Korntank entnommen wird. Wie in der Figur 5 dargestellt, beträgt der maximale Anstieg der Leistungsanforderung für den Vortrieb typischerweise etwa 22 kW (30 PS). Die tatsächliche für den Vortrieb erforderliche Leistung ist natürlich stark von den Boden- und Geländebedingungen abhängig.

Mit Bezug auf die Figuren 4 bis 6 kann der gesamte Prozess des Befüllens und Entladens des Korntanks nur 7 Minuten von Start bis Ende erfordern. Unter diesem Gesichtspunkt kann der Korntank in bloß 4 Minuten gefüllt werden, wenn man mit einem leeren Korntank 26 startet und einen der maximalen Kapazität entsprechenden Durchsatz des geernteten Korns annimmt. Diese 4 Minuten sind in Figur 5 als die Spitze der nach oben geneigten geradlinigen Kurve wiedergegeben. Beim Erreichen des Punkts, an dem der Korntank 26 gefüllt ist, wird mit dem Entladen begonnen, indem das Entladesystem eingeschaltet wird, welches das Korn durch den Entladeschneckenförderer 58 aus dem Mähdrescher 10 ausstößt. Wie die Masse des Korns im Korntank 26 absinkt, so sinkt auch der Betrag der Leistung, der erforderlich ist, das Korn im Korntank über das Feld zu befördern. Analog wird das Korn leichter bewegbar, wenn die Menge des Korns im Tank absinkt, wobei die Leistungsanforderung des Entladesystems absinkt, wie in Figur 4 dargestellt.

Die Figur 6 zeigt eine Überlagerung der Leistungsanforderungen des Entladesystems und der Kornmassenvortriebsanforderungen der Figuren 4 und 5, um die Gesamtleistungsanforderungen an den Motor 28 durch die Bewegung des Korns in den Korntank 26 und daraus hinaus darzustellen.

Es wird nun auf die Figur 7 und eine Ausbildung der Erfindung Bezug genommen, gemäß der eine Speichereinheit der Motorsteuerungseinheit 60 mit einer Leistungskurve oder einem Algorithmus einer Leistungskurve programmiert ist, die oder der erwartete vorbestimmte Betriebsbedingungen repräsentiert, so dass eine entsprechende Leistungskurve oder ein Leistungskurvenalgorithmus zumindest teilweise den Kraftstofffluss zum Motor 28 entsprechend erwarteter Änderungen der Belastung des Motors 28 ausgleicht. Die linke Achse der Figur 7 stellt den Start eines Beladungszyklus dar, wobei der Korntank leer ist, wobei der Korntank 26 nach einer Zeit von 4 Minuten völlig beladen ist, wie entlang der Abszisse dargestellt, und wobei der Korntank 26 nach 7 Minuten entladen wurde, wie ebenfalls entlang der Abszisse dargestellt.

Am Anfang der 7-minütigen Periode entwickelt der Motor 28 z. B. 250 kW (340 PS). Während der Periode des Korntankbeladens, nämlich der ersten 4 Minuten, befiehlt die Motorsteuerungseinheit 60 eine fortschreitend ändernde Größe, nämlich einen nach und nach ansteigenden Kraftstofffluss an den Motor 28 entlang einer Geraden, wie in Figur 7 dargestellt, basierend auf einer erwarteten Leistungsänderung und ohne Beruhen auf die Detektion irgendeiner Änderung der Leistung des Motors 28, um die erwartete größere Leistungsanforderung auszugleichen. Bis zu dem Zeitpunkt, an dem der Korntank 26 völlig gefüllt ist, wird die Leistungsabgabe des Motors 28 sich nach und nach um 15 kW (20 PS) gesteigert haben, während sich die Belastung nach und nach um etwa 22 kW (30 PS) gesteigert haben wird. Im Ergebnis wird die Motorgeschwindigkeit geringfügig abgesunken sein, aber das Absinken ist nur unbedeutend und wird wohl nicht die Aufmerksamkeit des Bedieners auf sich ziehen.

Wenn das Entladesystem eingeschaltet wird, stellt die Motorsteuerungseinheit 60 (s. Figur 7) vorausschauend (pro-aktiv) einen stufenförmigen Anstieg des Kraftstoffflusses zum Motor 28 bereit, ohne sich auf die Detektion irgendwelcher Änderungen der Motorleistung zu verlassen, um sich auf den stufenförmigen Anstieg der Leistungsanforderungen des Entladesystems vorzubereiten. Der stufenförmige Anstieg der Leistungsabgabe ist in der Figur 7 mit 29 kW (40 PS) dargestellt, was sehr gut mit der erwarteten anfänglichen Anforderung des Entladesystems von 29 kW übereinstimmt. Wenn jedoch der Entladevorgang fortschreitet, senkt die Motorsteuerungseinheit 60 die Kraftstoffflussrate zum Motor 28 ab, was durch eine sich nach unten neigende Linie in Figur 7 dargestellt wird, um somit vorausschauend die Ausgangsleistung des Motors in Erwartung des vorhersehbaren Absinkens der Leistungsanforderungen an den Motor 28 durch das Entladesystem und das Vortriebssystem anzupassen, ohne sich auf eine Detektion einer Änderung der Leistung des Motors 28 zu verlassen.

Es wird wieder auf Figur 7 Bezug genommen, gemäß der die Motorleistung am Ende des Entladevorgangs 7 Minuten nach dem Start des Prozesses vorausschauend auf 268 kW (365 PS) vermindert wurde. Zu diesem Zeitpunkt ist der Korntank leer und erfordert daher im Wesentlichen keine Leistung vom Motor 28 zum Vortrieb von Korn. Entsprechend ist die Leistungsanforderung des Entladesystems auf etwa 22 kW (30 PS) abgesunken. Bei leerem Korntank 26 wird das Entladesystem abgeschaltet. Wenn das Entladesystem abgeschaltet wird, vermindert die Motorsteuerungseinheit 60 vorausschauend die Kraftstoffflussrate zum Motor, ohne sich auf den Nachweis irgendeiner Änderung der Motorleistung zu verlassen, wobei die Motorleistung um 18 kW (25 PS) auf 250 kW (340 PS) vermindert wird, woraufhin der Zyklus wiederholt werden kann, ausgehend von 250 kW. Die Verminderung der Motorleistung um etwa 18 kW (25 PS) nähert sich der Verminderung der Leistungsanforderung um 22 kW (30 PS) an, wodurch die Motorgeschwindigkeit relativ konstant bleibt.

Die obige Beschreibung des Prozesses eines Korntankfüll- und -entladezyklus stellt eine vereinfachte Illustration der Verwendung einer erfindungsgemäßen Leistungskurve dar, die auf einer angenommenen Korntankfüllrate, einer angenommenen Korntankentladerate und der Annahme dar, dass kein anderes angetriebenes System irgendwelche wesentlichen Leistungsänderungen benötigt. Eine derartige Leistungskurve kann vorhergesagt werden und ist in Figur 7 mit i dargestellt.

Alternativ könnte der angenommene Zyklus von 7 Minuten unter Ernte- oder Ertragsbedingungen, die schlechter als optimal sind, anders verlaufen. Wenn die Zykluszeit anders ist, kann die erwartete Zykluszeit vom Bediener eingegeben werden, um auf diese Weise die Leistungskurve mit einer menschlich festgelegten Änderung zu modifizieren, woraufhin die Motorsteuerungseinheit 60 die Anstiegsrate der Motorleistung entsprechend festlegt, d. h. die Neigung der nach oben strebenden Linie in Figur 7, so dass die Motorleistung an dem Zeitpunkt 265 kW (360 PS) erreicht, an dem erwartet wird, dass der Korntank 26 voll ist. Die Motorleistung wird dann auf 294 kW (400 PS) angehoben, wenn das Entladesystem eingeschaltet wird und wird im Verlauf der Entladezeit wie oben beschrieben abgesenkt.

Alternativ kann die Motorsteuerungseinheit 60 programmiert werden, entsprechend der historischen Erfahrung trainiert zu werden, um dabei die Leistungskurve zu modifizieren. Ein derartiges Trainieren der Motorsteuerungseinheit 60 ist in der US 5 586 033 A offenbart, deren Offenbarung durch Verweis mit in die vorliegenden Unterlagen aufgenommen wird.

Weiterhin kann eine derartige Leistungskurve durch einen geeigneten Algorithmus entwickelt oder modifiziert werden, der eine Vielzahl von Sensoreingaben für eine fortdauernde Serie von Berechnungen der gewünschten Kraftstoffflussrate verwendet. Derartige Sensoreingaben umfassen die Kornmasse im Korntank 26, die Kornmassenfüllrate, die Kornfeuchtigkeit und Änderungen in der Neigung des Geländes, die z. B. von einem Ortungssystem, insbesondere einem Greenstar-System der vorliegenden Anmelderin erfasst werden.

Es wird immer noch auf Figur 7 Bezug genommen, wonach die Motorsteuerungseinheit 60 während der Korntankbefüllzeit eine fortdauernde Serie von Kontrollsignalen ausgibt, die relativ kleinere stufenförmige Änderungseingaben der Kraftstoffflussrate in den Motor eingeben. Eine relativ größere, stufenförmige Eingabeänderung wird befohlen, wenn das Entladesystem eingeschaltet wird, und noch einmal, wenn das Entladesystem ausgeschaltet wird. Außerdem wird eine Reihe an Kontrollsignalen, die relativ kleinere stufenförmige Änderungseingaben befehlen, während des Entladens des Korntanks 26 erzeugt, die durch das nach unten geneigte Liniensegment repräsentiert werden. Selbstverständlich kann jede zusätzliche Funktion, deren Betrieb direkt gesteuert oder zuverlässig vorhergesagt werden kann, oder die der Motorsteuerungseinheit 60 gelehrt werden kann, wie der Betrieb des Entladesystems, in den vorausschauenden Motorsteuerungsalgorithmus eingeschlossen werden.

Zusätzlich zu der vorausberechneten Korntankfüllrate und des Betriebs des Entladesystems kann eine Reihe an Faktoren die Summe der zu einem beliebigen Zeitpunkt auf den Motor wirkenden Lasten beeinflussen. Außerdem sollten einige Vorkehrungen zum Starten eines Beladungs- oder Entladevorgangs mit einigem schon im Korntank 26 enthaltenen Korn getroffen werden.

Somit erhält die Motorsteuerungseinheit 60 bei bevorzugten Ausführungsformen der Erfindung zusätzliche Eingaben von verschiedenen Sensoren am Mähdrescher über die erwarteten Laständerungen, die bereits oder bald auf den Motor ausgeübt werden. Zum Beispiel kann ein Belastungssensor im Korntank die aktuelle Menge des Korns im Korntank anzeigen. Ein Korntankbefüllmassensensor 70, wie in der US 5 686 671 A vorgeschlagen, deren Offenbarung durch Verweis hierin mit aufgenommen wird, kann verwendet werden, der Motorsteuerungseinheit 60 die aktuelle Massenbefüllrate an Stelle der angenommenen Füllrate anzuzeigen. Ein Kornfeuchtigkeitssensor kann dem CAN-Bus Kornfeuchtigkeitsinformationen zuführen, um dadurch das angenommene Gewicht der Kornmasse im Korntank anzupassen. Ein globales Positionierungssystem 72 auf dem Mähdrescher kann die Neigung des Geländes unmittelbar vor dem Mähdrescher vorhersagen, um auf diese Weise die zum Überqueren des Geländes erforderliche Vortriebskraft vorherzusagen und kann auch der Motorsteuerungseinheit 60 Neigungsinformationen zuführen.

Die erfindungsgemäße Motorsteuerungseinheit 60 erhält derartige Informationen, die sich auf die gegenwärtigen und erwarteten Leistungsanforderungen beziehen, getrennt von der Erfassung der Motorgeschwindigkeit, verwendet derartige Informationen, um die anstehenden Leistungsanforderungen zu berechnen, und passt die Kraftstoffflussrate zum Motor an, um die Leistungsabgabe des Motors 28 an die additive Summe der Belastungen anzupassen, die somit vorhergesagt werden kann. In bevorzugten Ausführungsformen wird somit die in Figur 7 dargestellte ideale Ausgangsleistungskurve entsprechend aktueller Eingaben von Sensoren an die Motorsteuerungseinheit 60 modifiziert, wobei die Motorsteuerungseinheit 60 den Kraftstofffluss zum Motor entsprechend der erwarteten Leistungsanforderungen dynamisch steigert oder absenkt.

Der oben beschriebene vorausschauende Teil des Motorleistungssteuerungssystems ist bestrebt, alle Änderungen der Leistungsanforderungen an den Motor vorwegzunehmen, wie auch die der Ausgangsleistung, um auf diese Weise Leistungsänderungen bereitzustellen, wenn die Bedarfsänderungen ausgeübt werden, so dass die Motorgeschwindigkeit bei einem relativ konstanten Wert innerhalb des Zielgeschwindigkeitsbereichs gehalten wird. Bei diesem Vorgang überwacht die Motorsteuerungseinheit 60 eine Vielfalt an relevanten Parametern, wie die gegenwärtige Motorgeschwindigkeit, die Motorphase (Drehwinkel), den Ladedruck im Kraftstoffsystem, die Lufttemperatur, die Kühlmitteltemperatur, die Drosselposition und dergleichen und schließt relevante Berechnungen für jeden Parameter in die Leistungskurvenalgorithmen ein. Wo verfügbar, werden auch die vom Greenstar-System gesammelten Daten der Motorsteuerungseinheit 60 verfügbar gemacht.

Es ist jedoch zu erwarten, dass keine vorausgeplante Erwartung der Leistungsanforderungen alle Anforderungsänderungen voraussehen kann, die auf den Motor ausgeübt werden. Daher empfängt die Motorsteuerungseinheit 60 Sensoreingaben von einer Vielzahl von Eingangssensoren und stellt die Kraftstoffflussrate basierend auf der Kombination auf diese Weise empfangener Eingaben ein. Dadurch verarbeitet die erfindungsgemäße Motorsteuerungseinheit 60 auch einen konventionellen, reagierenden Algorithmus parallel zu dem vorausschauenden oder pro-aktiven Algorithmus oder der Leistungskurve. Falls der Leistungsbedarf nicht von dem vorausschauenden ausgleichenden Algorithmus nicht befriedigt wird, so dass die Motorgeschwindigkeit sich unter den Zielgeschwindigkeitsbereich bewegt, wird unter einem derartigen reagierenden Algorithmus oder einer derartigen Leistungskurve der konventionelle Algorithmus mit reagierenden Parametern aktiviert und übernimmt die Kraftstoffflussentscheidungen, bis zu dem Zeitpunkt, an dem die Motorgeschwindigkeit sich wieder im Zielgeschwindigkeitsbereich befindet. Sobald die Motorgeschwindigkeit wieder innerhalb des Zielgeschwindigkeitsbereichs befindet, beenden die reaktiven Parameter in der Motorsteuerungseinheit 60 ihre Funktion und die vorausschauenden, pro-aktiven Parameter übernehmen wieder die Kontrolle der Motorgeschwindigkeit.

Wenn daher der Motorsteuerungseinheit 60 ein Zielmotorgeschwindigkeitsbereich nachgewiesen wird, können die vorausschauenden Motorleistungsänderungen in Richtung auf die Bereitstellung hinreichender Motorleistung gerichtet sein, um erwarteten Belastungsänderungen zu begegnen, wodurch die Motorgeschwindigkeit basierend auf Sensoreingaben, von Abweichungen der Motorgeschwindigkeit vom Zielbereich verschieden sind, innerhalb des Zielbereichs gehalten wird. Auf derartigen vorausgesehenen Belastungsänderungen basierende Kraftstoffzuführraten werden unabhängig davon geändert, ob die erwartete Belastungsänderung tatsächlich stattfindet oder nicht.

Wo die vorausschauenden Leistungsänderungen die Motorleistung nicht innerhalb des Zielbereichs halten, wie wenn eine unvorhergesehene Belastung auf den Motor ausgeübt wird, übernehmen die reagierenden Leistungseinstellungen und führen die Motorausgangsleistung und die Motorgeschwindigkeit wieder mit den Lastanforderungen ins Gleichgewicht, woraufhin der reagierende Leistungseinstellungsparameter für eine Zeitperiode abgeschaltet wird, bis die Motorgeschwindigkeit wieder von der Zielmotorgeschwindigkeit abweicht.

Während die erfindungsgemäßen, pro-aktiven Leistungskurven und Algorithmen nicht auf Änderungen der Motorgeschwindigkeit als solche reagieren, können derartige pro-aktive Leistungskurven und Algorithmen momentane Motorgeschwindigkeitsänderungen als Teil der pro-aktiven algorithmischen Berechnung berücksichtigen und somit darauf antworten.

Wenn die Motorsteuerungseinheit 60 weiterhin eine Kombination pro-aktiver und reagierender algorithmischer Berechnungen verwendet, kombiniert die Motorsteuerungseinheit 60 notwendigerweise derartige Rechnungen, um auf ein jeweiliges Kraftstoffflussratenkontrollsignal zu kommen. Somit kombiniert die Motorsteuerungseinheit 60 an einigen Punkten der Kontrollsequenz notwendigerweise die pro-aktiven und die reaktiven Eingaben. Eine derartige Kombination kann, wie unterschiedliche und getrennte Kontrollsignale, aus jeweils verschiedenen pro-aktiven und reaktiven Algorithmen oder Kurven hervorgehen. Eine derartige Kombination kann das Ergebnis einer mathematischen Kombination getrennt berechneter Kraftstoffflussraten sein. Eine derartige Kombination kann das Ergebnis einer Kombination der Algorithmen und einer Verwendung des Kombinationsalgorithmus sein, um eine einzige Ergebniskraftstoffflussrate zu berechnen.

Im Vorhergehenden bedeutet "pro-aktiv" in Bezug auf Leistungsänderungen eine auf eine mittels eines Sensors erfasste oder vorhergesagte erwartete Größe eines von der Motorgeschwindigkeit verschiedenen Parameters reagierende Aktion.

Im Vorhergehenden bedeutet "reagierend" oder "reaktiv" in Bezug auf Leistungsänderungen eine auf Motorgeschwindigkeitsänderungen reagierende Aktion.

Im Vorhergehenden bedeutet eine "vorbestimmte Betriebsbedingung" eine Bedingung, auf die reagiert wird. Die Größe einer derartigen Bedingung kann vorausgesetzt werden, wie in einer festen Leistungskurve, oder sie kann in Echtzeit erfasst werden, wobei die Größe der Bedingung durch einen geeigneten Leistungskurvenalgorithmus verarbeitet wird.

## Patentansprüche

1. Motorleistungssteuerungssystem (62) für einen Mähdrescher (10) mit einem Motor (28), wobei das Motorleistungssteuerungssystem (62) ein Kraftstoffsystem (64) mit Verstellmitteln (69) umfasst, die in Abhängigkeit von an einen Eingang der Verstellmittel (69) angelegten Steuersignalen die Rate einstellen, mit der Kraftstoff an Verbrennungskammern des Motors (28) abgegeben wird, und wobei das Motorleistungssteuerungssystem (62) eine elektronische Motorsteuerungseinheit (60) aufweist, die eingerichtet ist, eine Reihe an Kontrollsignalen zu erzeugen und an die Verstellmittel (69) zu übersenden, die die Verstellmittel (69) dazu veranlassen, die Rate zu ändern, mit der Kraftstoff in die Verbrennungskammern des Motors (28) abgegeben wird, um dadurch die Ausgangsleistung des Motors zu verstellen, wobei das elektronische Motorleistungs-steuerungssystem (62) eingerichtet ist, vorausschauende Änderungseingaben mit vorbestimmten Änderungsraten der den Verbrennungskammern des Motors (28) zugeführten Kraftstoffmengen zu Zeitpunkten bereitzustellen, die auf den Zeitpunkten basieren, an denen die jeweiligen Betriebsbedingungen auftreten und Informationen erhält, die sich auf die gegenwärtigen und erwarteten Leistungsanforderungen beziehen und diese Informationen verwendet, um die anstehenden Leistungsanforderungen zu berechnen und die Kraftstoffflussrate zum Motor (28) anzupassen, um die Leistungsabgabe des Motors (28) an die additive Summe der Belastungen anzupassen, und das Motorleistungssteuerungssystem (62) zumindest eine in einem Speicher abgelegte Leistungskurve und/oder einen Algorithmus für eine Leistungskurve aufweist, die bzw. der verwendbar ist, eine von den vorbestimmten Betriebsbedingungen, die sich von einer gemessenen Motorgeschwindigkeit unterscheiden, abhängige Sequenz von Änderungseingaben bereitzustellen, wobei die Leistungskurve oder der Algorithmus
(i) eine erste, ansteigende Linie umfasst, die eine erste Menge kleiner stufenförmiger Anstiege der Motorleistung über einen ersten Zeitraum in der Vorwegnahme einer ansteigenden Kornbeladung eines Korntanks (26) auf dem Fahrzeug über den jeweiligen Zeitraum wiedergibt, **dadurch gekennzeichnet, dass** die Leistungskurve oder der Algorithmus folgendes umfasst:
(ii) einen zweiten, verhältnismäßig größeren stufenförmigen Anstieg in der Motorleistung, der in Erwartung einer vergrößerten Belastung auf den Motor (28) bewirkt und dann durchgeführt wird, wenn ein Entladeschneckenförderer (57) auf dem Fahrzeug aktiviert wird, um Korn aus dem Korntank (28) zu entladen,
(iii) eine dritte, verhältnismäßig kleinere, absinkende Linie, die eine zweite Menge kleiner stufenförmiger Absenkungen der Motorleistung über einen zweiten Zeitraum in der Vorwegnahme einer verminderten Belastung des Motors (28) über einen folgenden Zeitraum wiedergibt, während dem der Entladeschneckenförderer (57) Korn aus dem Korntank (26) entlädt, und
(iv) ein viertes, verhältnismäßig größeres stufenförmiges Absinken der Motorleistung, das in Erwartung einer verminderten Belastung des Motors (28) bewirkt und dann durchgeführt wird, wenn der Entladeschneckenförderer (57) abgeschaltet wird.

2. Motorleistungssteuerungssystem (62) nach Anspruch 1, **dadurch gekennzeichnet, dass** die elektronische Motorsteuerung zusätzlich auf erfasste Änderungen der Belastung des Motors (28) reagiert.

3. Motorleistungssteuerungssystem (62) nach Anspruch 2, **dadurch gekennzeichnet, dass** das Fahrzeug eine zusätzlich durch den Motor (28) angetriebene Funktion umfasst, die betrieben werden kann, wenn sich das Fahrzeug bewegt oder steht, wobei das Motorleistungssteuerungssystem (62) einen Schalter umfasst, der zum Aktivieren und Deaktivieren der zusätzlichen Funktion in einer stufenförmigen Weise verwendbar ist, und wobei die abgespeicherte Leistungskurve und/oder der Algorithmus für die Leistungskurve verwendbar ist, in Reaktion auf eine Aktivierung und Deaktivierung des Schalters zu Zeitpunkten, die auf den Zeitpunkten basieren, an denen die Aktivierungen und Deaktivierungen des Schalters stattfinden, vorausschauend verhältnismäßig größere stufenförmige Änderungen in der Menge des an die Verbrennungskammern abgegebenen Kraftstoffs bereitzustellen, während zu Zeitpunkten, die auf dem zeitlichen Verhalten der jeweiligen vorbestimmten, sich von der zusätzlichen Funktion unterscheidenden Betriebsbedingungen basieren, gleichzeitig und additiv vorausschauende, verhältnismäßig kleinere stufenförmige Änderungseingaben in der Menge des an die Verbrennungskammern des Motors (28) abgegebenen Kraftstoffs bereitstellbar sind, wobei die bzw. der derart von der elektronischen Motorsteuerung genutzte Leistungskurve und/oder Algorithmus verwendbar ist, eine additive Kombination vorausschauender, verhältnismäßig größerer stufenförmiger Änderungseingaben und vorausschauender, verhältnismäßig kleinerer stufenförmiger Änderungseingaben für die Ausgangsleistung des Motors (28) in Erwartung sich ändernder Leistungsanforderungen an den Motor (28) bereitzustellen.

4. Motorleistungssteuerungssystem (62) nach einem der Ansprüche 1 bis 3, **dadurch gekennzeichnet, dass** die Leistungskurve und/oder der Algorithmus auf wenigstens eine oder mehrerer der folgenden Betriebsbedingungen reagiert: Kornmasse in einem Korntank (26) des Fahrzeugs, Korntankbefüllrate, Kornfeuchtigkeit, Dichte des im Korntank (26) aufgenommenen Korns, und Änderungen in der Neigung des Geländes, über das sich das Fahrzeug bewegt.

5. Motorleistungssteuerungssystem (62) nach einem der Ansprüche 1 bis 4, **dadurch gekennzeichnet, dass** eine zweite besagte vorbestimmte Betriebsbedingung, auf die die Leistungskurve und/oder der Algorithmus reagiert, die zusätzliche Funktion umfasst, und wobei die zusätzliche Funktion die Aktivierung und Deaktivierung des Entladeschneckenförderers (57) ist, der Korn aus dem Korntank (26) entlädt, und wobei vorausschauende, stufenartige Änderungen in der Leistung des Motors (28) durchgeführt werden, die auf erwarteten Belastungsänderungen des Motors (28) bei dem Start, der Durchführung und dem Anhalten des Betriebs des Entladeschneckenförderers (57) durch das Betätigen des Schalters basieren.

## Claims

1. Engine power control system (62) for a combine harvester (10) having an engine (28), wherein the engine power control system (62) comprises a fuel system (64) with adjustment means (69) which set the rate with which fuel is output to combustion chambers of the engine (28) as a function of control signals which are applied to an input of the adjustment means (69), and wherein the engine power control system (62) has an electronic engine control unit (60) which is configured to generate a series of control signals and to transmit them to the adjustment means (69), which control signals cause the adjustment means (69) to change the rate at which fuel is output into the combustion chambers of the engine (28), in order thereby to adjust the output power of the engine, wherein the electronic engine power control system (62) is configured to make available predictive change inputs with predetermined rates of change of the quantities of fuel fed to the combustion chambers of the engine (28), at times which are based on the times on which the respective operating conditions occur, and said engine power control system (62) receives information which relates to the current and expected power requirements and uses this information to calculate the upcoming power requirements and to adapt the fuel flow rate to the engine (28) in order to adapt the power output of the engine (28) to the additive sum of the loads, and the engine power control system (62) has at least one power curve which is stored in a memory, and/or an algorithm for a power curve, which power curve and/or algorithm can be used to make available a sequence of change inputs which are dependent on the predetermined operating conditions which differ from a measured engine speed, wherein the power curve or the algorithm (i) comprises a first rising line which represents a first quantity of small, step-shaped increases in the engine power over a first time period in the anticipation of an increasing grain load of a grain tank (26) on the vehicle over the respective time period,
**characterized in that** the power curve or the algorithm comprises the following:
(ii) a second, relatively large step-shaped increase in the engine power which acts on the engine (28) in anticipation of an increased load, and is then implemented if a discharge worm conveyor (57) on the vehicle is activated in order to discharge grain from the grain tank (28),
(iii) a third, relatively small, falling line which represents a second quantity of relatively small step-shaped decreases in the engine power over a second time period in the anticipation of a reduced load on the engine (28) over a subsequent time period during which the discharging worm conveyor (57) discharges grain from the grain tank (26), and
(iv) a fourth, relatively large step-shaped decrease in the engine power which is brought about in anticipation of a reduced load of the engine (28) and is implemented when the discharging worm conveyor (57) is switched off.

2. Engine power control system (62) according to Claim 1, **characterized in that** the electronic engine controller additionally reacts to detected changes in the load of the engine (28).

3. Engine power control system (62) according to Claim 2, **characterized in that** the vehicle comprises a function which is additionally driven by the engine (28) and which can be operated if the vehicle is moving or is stationary, wherein the engine power control system (62) comprises a switch which can be used to activate and deactivate the additional function in a step-shaped fashion, and wherein the stored power curve and/or the algorithm can be used for the power curve in reaction to activation and deactivation of the switch, at times which are based on the times at which the activations and deactivations of the switch take place, to predictively make available relatively large step-shaped changes in the quantity of the fuel which is output at the combustion chambers, while at times which are based on the chronological behaviour of the respective predetermined operating conditions which differ from the additional function predictive, relatively small step-shaped change inputs in the quantity of fuel which is output to the combustion chambers of the engine (28) can be made available simultaneously and additively, wherein the power curve and/or algorithm employed by the electronic engine controller can be used to make available an additive combination of predictive, relatively large step-shaped change inputs and predictive, relatively small step-shaped change inputs for the output power of the engine (28) in expectation of changing power requirements of the engine (28).

4. Engine power control system (62) according to one of Claims 1 to 3, **characterized in that** the power curve and/or the algorithm reacts/react to at least one or more of the following operating conditions: grain mass in a grain tank (26) of the vehicle, grain tank filling rate, grain moisture, density of the grain accommodated in the grain tank (26), and changes in the inclination of the ground over which the vehicle is moving.

5. Engine power control system (62) according to one of Claims 1 to 4, **characterized in that** a second said predetermined operating condition to which the power curve and/or the algorithm react/reacts comprises the additional function, and wherein the additional function is the activation and deactivation of the discharging worm conveyor (57) which discharges grain from the grain tank (26), and wherein predictive step-shaped changes in the power of the engine (28) are carried out which are based on expected changes in load of the engine (28) when the operation of the discharging worm conveyor (57) is started, carried out and stopped by the activation of the switch.

## Revendications

1. Système de commande de puissance de moteur (62) pour une moissonneusebatteuse (10) équipée d'un moteur (28), le système de commande de puissance de moteur (62) comprenant un système de carburant (64) avec des moyens de réglage (69) qui, en fonction de signaux de commande appliqués à une entrée des moyens de réglage (69), règlent le taux auquel le carburant est délivré aux chambres de combustion du moteur (28), et le système de commande de puissance de moteur (62) possédant une unité de commande de moteur électronique (60) qui est conçue pour générer une série de signaux de contrôle et les transmettre aux moyens de réglage (69), lesquels amènent les moyens de réglage (69) à modifier le taux auquel le carburant est délivré dans les chambres de combustion du moteur (28) afin de régler ainsi la puissance de sortie du moteur, le système de commande de puissance de moteur (62) électronique étant conçu pour fournir des entrées de modification anticipées avec des taux de modification prédéfinis des quantités de carburant acheminées aux chambres de combustion du moteur (28) à des instants qui se basent sur les instants auxquels se produisent les conditions de fonctionnement respectives et recevant des informations qui se rapportent aux puissances exigées actuelle et attendue et utilisant ces informations pour calculer les puissances exigées à venir et adapter le débit de carburant vers le moteur (28) en vue d'adapter la puissance délivrée par le moteur (28) à la somme cumulée des charges, et le système de commande de puissance de moteur (62) possédant au moins une courbe de puissance et/ou un algorithme pour une courbe de puissance stockée dans une mémoire, laquelle ou lequel peut être utilisé(e) pour délivrer une séquence d'entrées de modification dépendante de l'une des conditions de fonctionnement prédéfinies, lesquelles sont différentes d'une vitesse du moteur mesurée, la courbe de puissance ou l'algorithme
(i) comprenant une première ligne croissante qui reproduit une première quantité de petites augmentations échelonnées de la puissance du moteur sur une première période dans l'anticipation d'un chargement en grains croissant d'un réservoir à grains (26) sur le véhicule sur la période correspondante,
**caractérisé en ce que** la courbe de puissance ou l'algorithme comprend ce qui suit :
(ii) une deuxième augmentation échelonnée, comparativement plus grande, de la puissance du moteur qui intervient dans la perspective d'une charge accrue sur le moteur (28) et qui est effectuée lorsqu'un convoyeur à vis sans fin de déchargement (57) est activé sur le véhicule en vue de décharger les grains du réservoir à grains (28),
(iii) une troisième ligne descendante, comparativement plus petite, qui reproduit une deuxième quantité de petites diminutions échelonnées de la puissance du moteur sur une deuxième période dans l'anticipation d'une charge réduite du moteur (28) sur une période qui suit, pendant laquelle le convoyeur à vis sans fin de déchargement (57) décharge les grains du réservoir à grains (26), et
(iv) une quatrième diminution échelonnée, comparativement plus importante, de la puissance du moteur qui intervient dans la perspective d'une charge réduite du moteur (28) et qui est effectuée lorsque le convoyeur à vis sans fin de déchargement (57) est mis à l'arrêt.

2. Système de commande de puissance de moteur (62) selon la revendication 1, **caractérisé en ce que** la commande de moteur électronique réagit en plus aux modifications détectées de la charge du moteur (28).

3. Système de commande de puissance de moteur (62) selon la revendication 2, **caractérisé en ce que** le véhicule comporte une fonction supplémentaire entraînée par le moteur (28), laquelle peut être utilisée lorsque le véhicule se déplace ou est à l'arrêt, le système de commande de puissance de moteur (62) comprenant un commutateur qui peut être utilisé pour activer et désactiver la fonction supplémentaire d'une manière échelonnée, et la courbe de puissance et/ou l'algorithme pour la courbe de puissance mis(e) en mémoire pouvant être utilisé(e) pour, en réaction à une activation et une désactivation du commutateur, à des instants qui se basent sur les instants auxquels ont lieu les activations et les désactivations du commutateur, délivrer des modifications échelonnées prévisionnelles comparativement plus élevées de la quantité de carburant acheminée aux chambres de combustion, alors qu'à des instants qui se basent sur le comportement dans le temps des conditions de fonctionnement respectivement prédéfinies, différentes de la fonction supplémentaire, peuvent être délivrées des entrées de modification échelonnées, comparativement plus faibles, simultanées et cumulées de la quantité de carburant acheminée aux chambres de combustion du moteur (28), la courbe de puissance et/ou l'algorithme ainsi utilisé(e) par la commande de moteur électronique pouvant être utilisé(e) pour délivrer une combinaison cumulée d'entrées de modification échelonnées anticipées, comparativement plus grandes, et d'entrées de modification échelonnées anticipées, comparativement plus faibles, pour la puissance de sortie du moteur (28) dans l'attente des puissances exigées variables du moteur (28).

4. Système de commande de puissance de moteur (62) selon l'une des revendications 1 à 3, **caractérisé en ce que** la courbe de puissance et/ou l'algorithme réagit à au moins l'une ou plusieurs des conditions de fonctionnement suivantes : masse de grains dans un réservoir à grains (26) du véhicule, taux de remplissage du réservoir à grains, humidité des grains, densité des grains recueillis dans le réservoir à grains (26), et modification de la pente du terrain sur lequel se déplace le véhicule.

5. Système de commande de puissance de moteur (62) selon l'une des revendications 1 à 4, **caractérisé en ce qu'**une deuxième desdites conditions de fonctionnement prédéfinies à laquelle réagit la courbe de puissance et/ou l'algorithme comprend la fonction supplémentaire, et la fonction supplémentaire étant l'activation et la désactivation du convoyeur à vis sans fin de déchargement (57) qui décharge les grains du réservoir à grains (26), et des modifications échelonnées par anticipation de la puissance du moteur (28) étant effectuées, lesquels se basent sur les changements de charge attendus du moteur (28) lors du démarrage, de l'exécution et de l'arrêt du fonctionnement du convoyeur à vis sans fin de déchargement (57) par l'actionnement du commutateur.
